# EUROPEAN PATENT APPLICATION

(11) **EP 3 613 291 A1**
(43) Date of publication of application: **26.02.2020**
(21) Application number: 19767684.4
(22) Date of filing: 11.03.2019
(51) Int. Cl.: A21C 15/00, A21B 1/42, A21C 11/16, A23G 3/20, A23P 20/20

(54) **BEAN PASTE WRAPPING MACHINE, AND BEAN PASTE WRAP MANUFACTURING METHOD**

(30) Priority: 14.03.2018 JP 2018046704
(71) Applicant: Masdac Co., Ltd., Saitama 359-1147 (JP)
(72) Inventor: ENDO, Toyohiko, Tokorozawa-shi, Saitama 359-1147 (JP); WADA, Minoru, Tokorozawa-shi, Saitama 359-1147 (JP)
(74) Representative: Geskes, Christoph
(86) International application number: PCT/JP2019/009819
(87) International publication number: WO 2019/176884

(57) **Abstract**

Provided are an apparatus and a method for manufacturing folded pancakes, employing a continuous two-step forming process performed on a baking plate that is continuously and circularly moving, in which one end of the dough of a pancake is folded in the direction to cover the filling of the pancake, and then the dough that has been folded is folded again so as to wrap the filling. The apparatus includes a conveyance device provided with baking plates moving continuously and circularly, and a forming device attached to the conveyance device. The forming device includes a first forming unit that forms a dough that has been baked such that one end of the dough is folded in the direction to cover a filling, and a second forming unit that forms the dough such that the dough formed by the first forming unit further covers the filling.

## Description

### Technical Field

The present invention relates to an apparatus and a method for manufacturing folded pancakes. In particular, the present invention relates to an apparatus and a method for manufacturing folded pancakes employing a continuous two-step forming process that includes the following two steps: (1) one end of the dough for a pancake is folded so as to cover the filling of the pancake; and (2) the dough that has been folded is folded again so as to wrap the filling; both steps being performed on a baking plate that is continuously and circularly moving in a prescribed manner.

### Background Art

There is a Japanese confection called *an-maki,* which is made such that (1) bean paste is placed on a rectangular-shaped piece of baked dough, (2) one end of the dough is folded so as to cover the bean paste, and (3) the dough is further folded so that the folded part is placed on the remaining part of the dough so as to wrap the bean paste. Conventionally, the *an-maki* has been manufactured by hand by craftsworkers. Such manual work has been performed so that (1) dough is supplied on a heated baking plate that has a rectangular shape, (2) bean paste, which is a filling, is placed on the dough, (3) one end of the dough is folded using a spatula, (4) the folded dough is further folded by hand, and (5) the baked dough is picked up from the baking plate. The manufacturing process of the *an-maki* is characteristic of two-step forming. Because the dough is folded two times, the finished *an-maki* has a shape of being folded in three.

The *an-maki* described above is an example of pancakes that are manufactured using a two-step forming process. A locally favored Japanese pancake *taiho-maki* (a long roll), which is manufactured in a similar manner as the *an-maki,* is also an example of a folded pancake. The filling is not limited to bean paste, but cream and the like can be used. Multiple fillings such as cream and bean paste can be used simultaneously. Pancakes that are manufactured using this two-step forming process are expected to be popular in the countries other than Japan. Thus, there is a need for an apparatus that is able to efficiently produce pancakes using two-step forming process. There has been manufactured a pancake that is produced such that a filling is placed on a circular piece of baked dough that is then folded in two. A manufacturing apparatus to produce such a pancake also has been developed.

Patent Document 1 discloses an apparatus for manufacturing folded pancakes. The apparatus is configured such that molds are mounted at a predetermined interval on a conveyor disposed, each mold including a pair of plates on which sheet-like material is to be placed, the pair of plates being configured to be rotated on a hinge, and the conveyor being intermittently moved. The folded pancake is produced such that after the sheet-like material is placed on the mold, a filling is put on the sheet-like material, so that the mold is closed by closing members, the closing being synchronized with the intermittent transport of the mold on the conveyor.

The mold of the apparatus of Patent Document 1 can fold the sheet material in two, a configuration that enables the apparatus to produce pancakes stably and efficiently. However, although the forming process of the apparatus includes one-time folding of the sheet-like material, the molds are transported intermittently, not continuously, and therefore there is room for improvement of this apparatus in terms of production speed. In addition, the shape of pancakes to be produced is determined by the shape of the mold to be used, and further a dedicated conveyor corresponding to a specific mold is required, which increases the initial investment for the apparatus. Above all, the apparatus cannot be used in manufacturing a pancake as represented by the *an-maki* that is produced by folding its material in three using a two-step forming process.

### Prior-art Document

### Patent Document

Patent Document 1: Japanese Unexamined Patent Application Publication No. H06-62719.

### Summary of the Invention

### Technical Problem To Be Solved

The present invention has been made to solve the problems of the above-described conventional apparatus for manufacturing folded pancakes, including its low productivity, high initial cost in making the apparatus, and the inability to manufacture a pancake that is to be folded in three. It is an objective of the present invention to provide an apparatus and a method for manufacturing folded pancakes employing a continuous two-step forming process that includes the following two steps: (1) one end of a dough of a pancake is folded so as to cover the filling of the pancake; and (2) the dough that has been folded is folded again so as to wrap the filling; with both steps being performed on a baking plate that is continuously and circularly moving in a prescribed manner.

### Solution to the Problem

An apparatus according to the present invention for manufacturing folded pancakes includes a conveyance device comprising (1) baking plates moving continuously and circularly, and (2) a forming device that is attached to the conveyance device. The forming device includes a first forming unit that forms a dough that has been baked such that one end part of the dough is folded in a direction to cover a filling, and a second forming unit that forms the dough such that the dough formed by the first forming unit further covers the filling. The first forming unit further includes a scraper that is removably fixed to a driving shaft that while rotating makes two-dimensional movement in the vertical direction and in a dough-transport direction, and that is configured to operate such that the scraper (a) awaits, while tilted at a prescribed angle, the dough that is being transported, (b) while rotating lifts up the front part of the dough to form the dough, and (c) further rotates in the same direction as the direction for forming the dough, so as to return to the position where the scraper awaits a coming new dough.

The second forming unit preferably includes a scraper that forms the dough in a folded manner, or a roller that forms the dough into a rolled shape.

A method according to the present invention for manufacturing folded pancakes using an apparatus for manufacturing folded pancakes, which method includes (1) a conveyance device that includes baking plates that are moving continuously and circularly, and (2) a forming device that is attached to the conveyance device, and includes forming steps in which the forming device forms a dough that has been baked such that the dough covers a filling. The forming steps include a first forming step in which an end part of the baked dough is folded in the direction to cover the filling by using a first forming unit of the forming device, and a second forming step in which the dough that has been formed in the first forming step is formed such that the dough further covers the filling by using a second forming device of the forming device. The first forming unit includes a scraper that is removably fixed to a driving shaft that makes two-dimensional movement in the vertical direction and in the dough-transport direction while rotating, and is configured to operate such that the scraper (a) while tilted at a prescribed angle, awaits the dough that is being transported, (b) lifts up the front part of the dough to form the dough while rotating, and (c) further rotates in the same direction as the direction to form the dough, so as to return to the position where the scraper awaits a coming new piece of dough.

The second forming unit preferably includes a scraper that forms the dough in a folded manner, or a roller that forms the dough into a rolled shape. The apparatus for manufacturing folded pancakes further includes a dough-supply machine that is attached to the conveyance device, a baking device, a filling-replenishment device, and a takeout device. The method for manufacturing folded pancakes further includes (a) a dough-discharging step in which the dough-supply machine discharges, onto each of the baking plates that moves continuously and circularly, so as to form a desired shape of the dough that has been provided into a hopper of the dough-supply machine, the dough-discharging step being performed before the forming step, and (b) a baking step in which the baking device bakes the dough that has been discharged, (c) a filling-discharging step in which the filling-replenishment device discharges a filling on the baked dough, and (d) a takeout step in which the takeout device takes out the formed dough from the conveyance device.

### Advantageous Effects of the Invention

An apparatus and a method for manufacturing folded pancakes according to the present invention includes a first forming unit that forms a piece of dough such that one end of the dough is folded in the direction to cover a filling, and a second forming unit that forms the dough formed by the first forming unit so as to further cover the filling. Because of these features, the apparatus, by using baking plates that move continuously and circularly, is able to efficiently manufacture pancakes that have more sophisticated shapes than conventional pancakes, which have shapes produced by simply being folded in two.

Also, according to the apparatus of the present invention, the first forming unit includes a scraper, and the second forming unit includes a scraper or a roller that is used to form a piece of dough into a rolled shape. Because of these features, the apparatus is able to form the dough into a desired shape, and it does not need to include individual molds used for forming a dough, whereby the structure of the apparatus is simplified, the initial cost for making the apparatus is decreased, and pancakes can be manufactured in a variety of shapes.

### Brief Descriptions of the Drawings

FIG. 1 is a drawing that schematically shows the overall structure of an apparatus for manufacturing folded pancakes according to an embodiment of the present invention.
FIG. 2(a) and FIG. 2(B) are planar views of the apparatus shown in FIG. 1, wherein FIG. 2(a) is the overall structure of the apparatus, and FIG. 2(b) is an enlarged view of part A in FIG. 2(a).
FIG. 3(a) and FIG. 3(b) are cross-sectional drawings of the apparatus shown in FIG. 1, wherein FIG. 3(a) is the overall structure of the apparatus, and FIG. 3(b) is an enlarged view of part B in FIG. 3(a).
FIG. 4 illustrates movements of a forming device of the apparatus in folding the dough of a pancake according to an embodiment of the present invention.
FIG. 5 illustrates movements of a forming device of the apparatus in folding the dough of a pancake according to another embodiment of the present invention.
FIG. 6 is a flow chart for explaining a method for manufacturing folded pancakes according to an embodiment of the present invention.

### Descriptions of the Embodiments

Next, specific examples that embody an apparatus and a method for manufacturing folded pancakes according to the present invention will be described in detail with reference to the drawings.

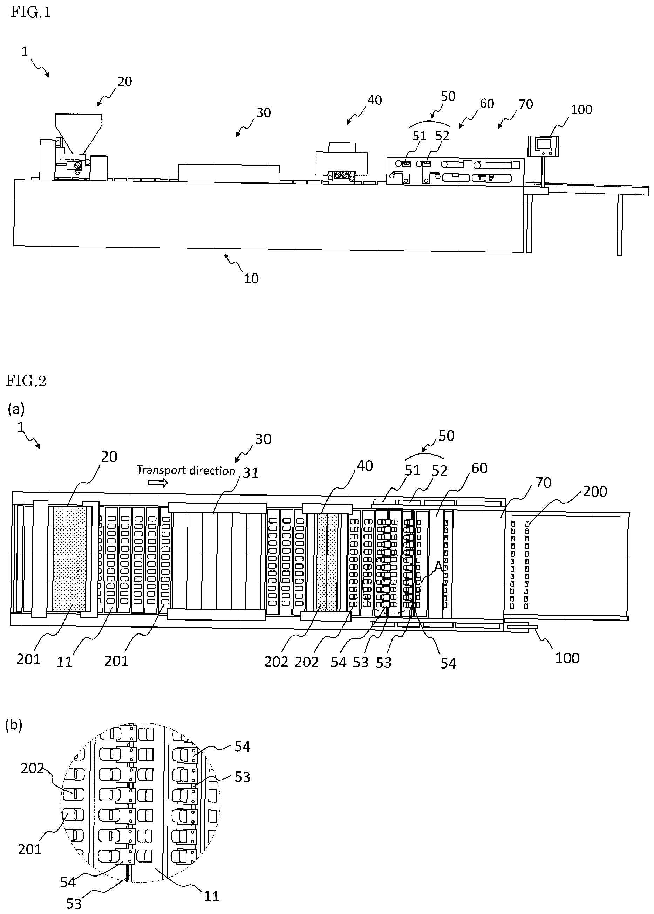

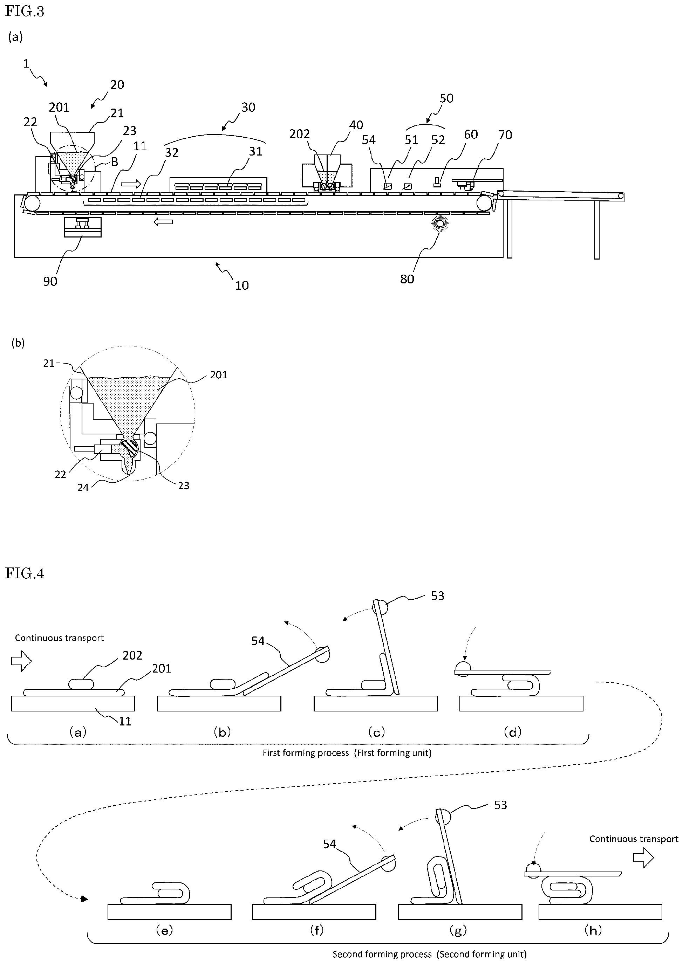

FIG. 1 is a drawing that schematically shows the overall structure of an apparatus for manufacturing folded pancakes according to an embodiment of the present invention. FIG. 2(a) and FIG. 2(B) are planar views of the apparatus shown in FIG. 1. FIG. 2(a) shows the overall structure of the apparatus, and FIG. 2(b) is an enlarged view of part A in FIG. 2(a). FIG. 3(a) and FIG. 3(b) are cross-sectional drawings of the apparatus shown in FIG. 1, wherein FIG. 3(a) is the overall structure of the apparatus, and FIG. 3(b) is an enlarged view of part B in FIG. 3(a).

With reference to FIG. 1 to FIG. 3(b), an apparatus for manufacturing folded pancakes 1 according to an embodiment of the present invention will now be described. The apparatus 1 includes a conveyance device 10, multiple baking plates 11 on each of which pancake dough is placed to be transported, a dough-supply machine 20 that is attached to the conveyance device 10, a baking device 30, a filling-replenishment device 40, a forming device 50, and a takeout device 70. The conveyance device 10 includes a conveyance guide on which the multiple baking plates 11 are mounted in a row, the conveyance guide moving in a circular and continuous manner. The conveyance device 10 described herein includes, in an integrally combined manner, the dough-supply machine 20, the baking device 30, the filling-replenishment device 40, the forming device 50, and the takeout device 70. However, the conveyance device 10 does not necessarily include those integrally combined devices, but may include partial combinations of those devices according to embodiments.

The apparatus 1 is configured to continuously manufacture folded pancakes such that a piece of dough 201 that contains premixed materials is discharged onto the baking plate 11 into a desired shape, the dough 201 is baked while it is transported, a filling 202 is placed on the baked dough 201, the dough 201 is folded so as to wrap the filling 202 to form a folded pancake, and the folded pancake is removed. The folded pancake described herein refers to pancakes manufactured such that a filling is placed on a dough, and the dough is folded so as to cover or wrap the placed filling in a two-step process to form a finished pancake. The filling can include bean paste or any of a variety of creams, and the like.

Specifically, in the apparatus 1, the forming device 50 includes two forming units: a first forming unit 51 and a second forming unit 52, which allow pancakes that require a two-step forming process to be continuously manufactured without a conveyor being intermittently moved even if two-step forming is performed. Replacing each of the forming units with an appropriate one allows the apparatus 1 to manufacture pancakes having a variety of shapes.

The details of each component of the apparatus 1 will be described hereafter. The conveyance device 10 enables the baking plates 11, which are mounted on the conveyance guide in a row, to continuously operate in a circular path. The baking plates 11 are transported horizontally from the underside of the dough-supply machine 20 that is disposed at the end of the upstream side of the conveyance device 10 to the takeout device 70 at the downstream side thereof, and are then turned at the rolling part disposed at the end of the downstream side of the conveyance device 10. The baking plates 11 are transported toward the upstream side while the upper surface of the baking plates on which the dough 201 is to be placed faces downward. The baking plates 11 are turned at the roller part that is disposed at the end of the upstream side of the conveyance device 10, and then they are again returned to the position under the dough-supply machine 20.

Because the baking plates 11 are heated from above and below while they pass through the baking device 30 where pieces dough 201 are baked, the baking plate 11 is preferably made of a metal that has a good heat conductivity, such as copper or a copper alloy. The baking plate 11 has a rectangular shape, and is disposed on the conveyance guide such that the long side of the plate is orthogonal to the transport direction. Each baking plate 11 is removably fixed at both of its longitudinal ends to the conveyance guide that moves circularly. Even if one of the baking plates 11 is degraded due to a deterioration on the surface, such as the surface getting scratched, that degraded baking plate 11 can be replaced by a new one.

As described above, the baking plates 11 are moved circularly, such that each surface on which dough 201 is placed always faces the outside direction of the conveyance guide. Accordingly, the conveyance device 10 is configured to include a waste-removing device 80, which removes extraneous matter, such as the leavings of dough 201 or filling 202 that has adhered to the baking plates 11, and an oil-application device 90, which applies oil to the surface of the baking plates 11 so that the surface of a baked dough 201 looks fine, and the baked dough 201 can easily be removed from the baking plates 11 after the two-step forming has been performed.

The waste-removing device 80 includes a rotary brush. The brush is held under the baking plates 11 within the distance where the tips of the brush can be pressed on each of the baking plates 11, in order to clean the surface of the plates 11 on which the dough 201 is placed while the baking plates 11 are transported facing downward. The rotary brush may be provided with a cover or a dust collector to prevent the leavings of the dough 201 or the filling 202 from being scattered after they have been removed from the surface of the plates 11.

The oil-application device 90 applies oil on the surface of the baking plates 11 after the plates 11 have been cleaned by the waste-removing device 80. It is preferable that the oil is thinly and evenly applied to the surface of the plates 11. The oil is applied by using a belt that is made of a nonwoven fabric that circulates while being lubricated is lightly pressed on the surface of the plates 11 that are moving. The oil-application device may be configured such that a rotatable roller applies oil to the surface of the plates 11.

The dough-supply machine 20 includes a hopper 21, a piston 22 that allows a prescribed amount of the dough 201, which is held inside the hopper 21, to be discharged onto a baking plate 11, and a valve 23 that moves in synchronization with the movement of the piston 22 to switch the flow path of the dough 201 flowing from the hopper 21. The dough-supply machine 20 further includes a nozzle 24 from which the dough 201 is discharged onto the baking plate 11 so that the dough 201 is formed into a desired shape on the plate 11.

After the dough 201 has been supplied into the hopper 21, where the valve 23 is in a position that closes the flow channel, the valve 23 rotates to the position where the flow channel is established from the hopper 21 to the piston 22. When the piston 22 retracts from the position where the piston 22 has advanced, the dough 201 is sucked into a cylinder that encompasses the piston 22. Because the amount of the dough 201 to be sucked into the cylinder varies according to the retracted length of the piston 22, the retracted length is determined in accordance with the amount of the dough 201 that is to be discharged on the baking plate 11.

In the state where the dough 201 has been sucked into the cylinder, if the valve 23 rotates to the position where the flow channel is established from the piston 22 to the nozzle 24, and then the piston 22 advances, the dough 201 inside the cylinder is supplied onto the baking plate 11 via the nozzle 24. Because, in manufacturing *an-maki,* the dough 201 is baked in a rectangular shape, the nozzle 24 has a long slit-shape opening that extends in the direction that is orthogonal to the transport direction. Because the baking plates 11 are continuously transported, if the advancing speed of the piston 22 is adjusted in accordance with the transportation speed of the baking plates 11, the amount of the dough 201 to be fed onto the baking plate 11 is adjusted in accordance with the prescribed thickness and the length of the long side in the finished *an-maki.*

The apparatus 1 can manufacture multiple pancakes at one time. When multiple pancakes are manufactured at one time, the pistons 22 and the nozzles 24 are arranged such that the respective number of the pistons 22 and the nozzles 24 is equal to the number of the pancakes to be manufactured, and the direction of the arrangement thereof is orthogonal to the transport direction of the conveyance device 10. FIG. 2 presents an example case in which 12 doughs 201 are simultaneously fed onto each one of the baking plates 11. The number of the doughs 201 fed onto each baking plate 11 is not limited to 12, but the number is determined according to the size of each pancake to be manufactured relative to the size of the baking plate 11.

In the dough 201 supply mechanism, the supply volume of the dough 201 can be controlled by adjusting the moving speed of the piston 22 so as to cope with various transportation speeds of the baking plates 11. However, this supply mechanism cannot supply the dough 201 while the dough 201 is being sucked into the cylinder. In embodiments of the present invention, the dough-supply machine 20 includes a reciprocating means that moves the supply mechanism, including the hopper 21, of the dough 201within a certain distance in the transport direction of the conveyance device 10.

The dough-supply machine 20 starts to feed dough 201 onto a baking plate 11 at the downstream-side end point of the reciprocating movement range of the reciprocating means, moves the supply mechanism of the dough 201 to the upstream side while feeding the dough 201, and finishes feeding the dough 201 at the upstream-side end point of the reciprocating movement range. Next, the reciprocating means returns the dough-supply machine 20 to the downstream-side end point of the reciprocating movement range while sucking the dough 201 into the cylinder, and starts to feed the dough 201 onto a baking plate 11 at the downstream-side end point. While the dough 201 has been sucked, the baking plates 11 are being transported. However, by moving the supply mechanism to the downstream side in synchronization with the transportation of the baking plate 11, the period when the dough 201 cannot be fed onto each of the baking plates 11 can be substantially eliminated. As a result, this enables uninterrupted supply of the dough 201 onto the baking plates 11 even if the transportation speed of the conveyance device 10 is increased.

In addition, as described above, the apparatus 1 is not configured to be dedicated to manufacturing only *an-maki,* but is to be applied to manufacturing a variety of pancakes produced using a two-step forming process. Accordingly, if pancakes other than *an-maki* are to be manufactured, the nozzle 24 is changed to one that has the shape that is appropriate to the shape of the dough 201 of the pancake to be manufactured. The nozzle 24 may be configured to be removable so that a variety of nozzles having different shapes can be used for manufacturing a variety of pancakes.

In the embodiment described above, the dough-supply machine 20 is configured to include a reciprocating means that moves the supply mechanism within a certain distance in the transport direction. However, in other embodiments, the dough-supply machine 20 may be configured to include a reciprocating means that moves the supply mechanism in the direction that is orthogonal to the transport direction. Also, the reciprocating means may be configured to move the supply mechanism vertically so that the supply mechanism can move three-dimensionally. Thus, the apparatus 1 that is provided with a freely moving mechanism for supplying dough 201, and with a nozzle 24 that is configured to be replaceable and that can deal with a variety of doughs and can form the doughs into various shapes.

The baking device 30 is configured to heat the baking plates 11 and the dough 201 supplied on the baking plate 11 to bake the dough 201. The baking device 30 includes an upper baking part 31 and a lower baking part 32, the former heating from above, and the latter heating from underneath the baking plates 1,1 each of which carries the doughs 201. In a pancake that is manufactured by wrapping a filling 200 inside it such as *an-maki,* the lower surface of the dough 201 that is in contact with the baking plate 11 makes the outer surface of the baked-up pancake in many cases. Therefore, the apparatus 1 is configured such that the lower baking part 32 is longer than the upper baking part 31 so that the lower surface of the dough 201 is finely browned. However, some pancakes require that the upper surface of the dough 201 that is heated by the upper baking part 31 be also finely browned. Therefore, the length of the lower baking part 32 may be configured to be the same as that of the upper baking part 31, or shorter than that of the upper baking part 31.

The heat source used by the baking device 30 can be a gas burner, an electric heater, or an induction heater A combination of heat sources may be used so that the heat source of the upper baking part 31 differs from that of the lower baking part 32. The baking device 30 is configured such that the upper baking part 31 and the lower baking part 32 respectively include multiple heating units that are arranged in a row. Each of the heating units or a block of the heating units is provided with a temperature controller so that the baking device 30 can appropriately control the temperature in accordance with the type of dough to be heated. Thus, the temperature control of the baking device 30 can be performed by adjusting the temperatures by using the temperature controllers according to their positions, whereby the baking device 30 can provide a temperature profile appropriate to a specific pancake to be manufactured.

The filling-replenishment device 40 is configured to feed a filling 202 onto a pancake. The filling-replenishment device 40 includes, similar to the dough-supply machine 20, includes a hopper that holds the filling 202 to be supplied to a pancake, a valve that switches between supplying and not supplying the filling 202, and a piston that discharges the filling 202. The valve and the piston provided to the filling-replenishment device 40 can have the same structure as the valve 23 and the piston 22 provided to the dough-supply machine 20, but a different structure may be provided to the valve and piston of the filling-replenishment device 40. Because the filling 202 is supplied onto the dough 201 at a specific position of the dough 201 so as to form a specific shape, a nozzle to supply the filling 202 can be configured to be replaceable so as to accord with a pancake to be manufactured. Also, the filling-replenishment device 40 can be provided with a moving means that moves the supply mechanism of the filling 202, including the hopper, unidimensionally, two-dimensionally, or three-dimensionally so as to accord with the shape of the filling 202 to be formed.

For *an-maki,* bean paste is typically used as the filling 202, but the filling-replenishment device 40 deals with a variety of fillings other than the bean paste as the filling 202. The filling 202 to be supplied is not limited to one kind, but the device 40 may be configured to supply two or more kinds of fillings simultaneously. In addition, if two kinds of the fillings 202 are to be supplied, the fillings 202 may be supplied in such a manner that each filling is arranged in a row or in an overlapping manner on the dough 201. Also, the supply-flow channel of the filling 202 may be configured such that the channel includes an inner tube, and an outer tube, through which tubes different kinds of fillings 202 are respectively supplied. The fillings 202 may be supplied such that the filling 202 supplied from the outer tube wraps the filling 202 supplied from the inner tube.

In the embodiment shown in Figure 3, the filling-replenishment device 40 includes inside the hopper a partition by which two fillings 202 can be simultaneously supplied. The two fillings 202 can be simultaneously and independently supplied through valves, pistons, and nozzles that are respectively separately provided. Therefore, the amount of the two fillings 202 being supplied and the layout of the fillings 202 on a dough 201 can be set flexibly. In combination of the moving means that moves the supply mechanism unidimensionally, two-dimensionally, or three-dimensionally by using a variety of nozzles, the filling-replenishment device 40 of the apparatus 1 can supply the fillings 202 to a variety of pancakes in such a manner that the two fillings 202 are arranged in a row in the width direction, or in a staggered manner, on a dough 201.

The forming device 50 is configured to form the dough 201 into the finished form of a pancake to be manufactured after a filling 202 has been supplied to the dough 201. In manufacturing pancakes that require a forming process used in manufacturing pancakes such as *an-maki,* even in automated machines that employ the conveyance device 10, transport of the pancake is typically stopped once when the dough 201 is formed by a forming part, and while the transport is stopped, the dough 201 is formed by the forming device 50 into a desired shape. Then, the transport of the dough 201 is resumed after the forming has been completed. This type of intermittent transport has been generally used in automatic manufacturing of folded pancakes. In this manufacturing method, while the transport of doughs is stopped, the output of finished pancakes also is stopped, and therefore increasing the manufacturing productivity in such a manufacturing method is not easy.

In order to overcome the above-described disadvantages of a conventional manufacturing apparatus, the apparatus 1 includes a first forming unit 51 located in the upstream side and a second forming unit 52 located in the downstream side in the transport direction of the conveyance device 10. When the filling-replenishment device 40 has finished its replenishing work, the dough 201 is in contact with the baking plate 11 in a flat shape, and the filling 202 is placed on a part of the surface or on the whole surface of the flattened dough 201. Accordingly, the forming process is performed as follows. In the first forming process, the first forming unit 51 lifts up one end of the dough 201, and then the lifted-up part is folded so as to cover the filling 202. The first forming unit 51 includes a scraper 54 that is used for lifting up one end of the dough 201 and folding the lifted-up part over the filling 202.

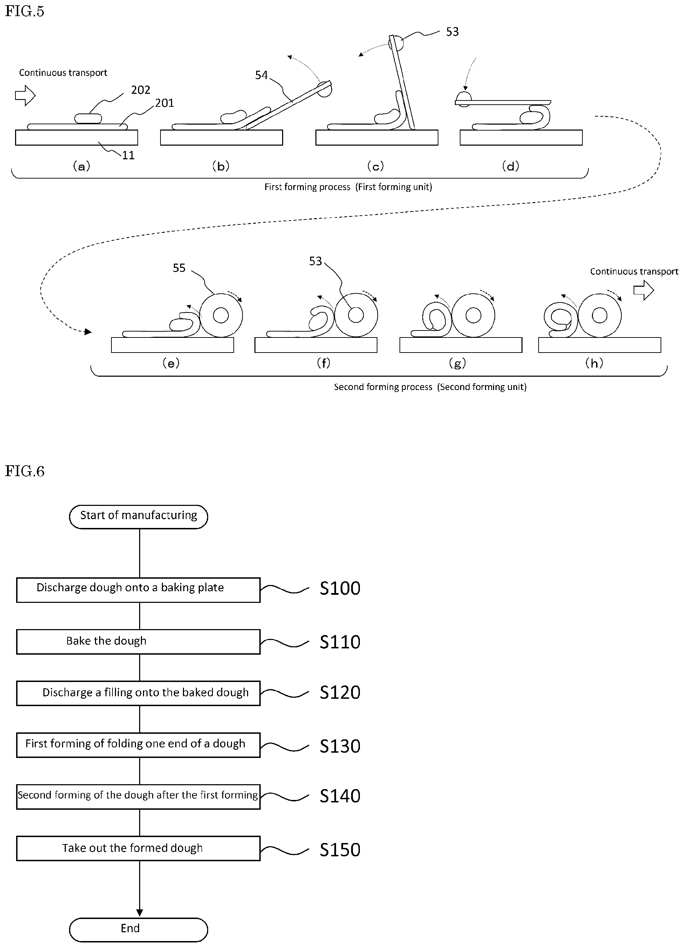

The scraper 54 is configured to operate, as will be described in detail later with reference to Figures 4 and 5, such that first the scraper 54 faces a coming dough 201 at a prescribed angle, and then rotates so as to lift up one end of the dough 201 to fold the lifted-up part over the filling 202. Accordingly, each of the scrapers 54 of the first forming unit 51 is fixed to a first driving shaft 53 that rotates. Fixing of the scraper 54 to the first driving shaft 53 is made such that the periphery of the first driving shaft 53 is cut to fit the width of the scraper 54 so as to form one step, and the scraper 54 is removably screwed to the flat surface of the formed step as shown in FIG. 2(b). As shown by FIG. 2(a), multiple scrapers 54 are provided so as to correspond to the number and position of the doughs 201 that have been supplied onto each of the baking plates 11 by the dough-supply machine 20.

Then, the second forming process is performed such that the second forming unit 52 enables the formed dough 201 to cover the filling 202 by the first forming unit 51 to further cover the filling 202. The second forming process may be performed such that the dough 201 formed in the first forming process is further folded, or is formed into a rolled shape. Further, the second forming process may be performed such that the end part of the dough 201 opposite to the end part of the dough 201 that has been formed to cover the filling 201 in the first forming process is formed so as to cover the filling 202.

If the second forming process is performed so as to further fold the dough 201 formed in the first forming process, the use of a scraper is appropriate for the second forming. If the dough 201 formed in the first forming process is to be formed into a rolled shape in the second forming process, the use of a roller is appropriate. Thus, the second forming unit 52 includes a scraper that forms the dough 201 in a folding manner, or a roller that forms the dough 201 into a rolled shape.

In embodiments, the scraper 54 is flatly shaped. The surface of the scraper 54 that contacts the dough 201 may be treated with Teflon™ or other treatments that form small projections on that surface. In other embodiments, the scraper 54 is not flatly shaped, but is formed so as to include a curved depression on the upper surface, so that when the dough 201 is folded in the first forming process, the dough 201 is formed into a curved shape. Such a configuration of the scraper 54 is used to manufacture pancakes that have a round shape.

If the second forming unit 52 includes a scraper 54, the shape of the scraper 54 may be the same as that of the scraper 54 of the first forming unit 51, or the scraper 54 of the second forming unit 52 may differ from that of the first forming unit 51 in the shape and/or the material used. The scraper 54 of the second forming unit 52 is fixed to the second driving shaft 53. In the embodiments, the first forming unit 51 and the second forming unit 52 use the same scraper 54, and the first driving shaft 53 and the second driving shaft 53 use the same driving shaft. If the second forming unit 52 includes a roller, the second driving shaft 53 may be provided with a keyway so that the roller is fixed to the second driving shaft 53 using a key.

Because the forming device 50 includes the first forming unit 51 and the second forming unit 52 that operate independently, a two-step forming is performed on the doughs 201 that are continuously transported, without slowing the transportation speed of the doughs 201, which increases the productivity of the apparatus 1. The doughs 201 that have been formed through the two-step forming process by the forming device 50 are substantially finished, so that they can be used as finished products. However, embodiments may include branding by a branding device 60, which is provided between the forming device 50 and the takeout device 70.

The branding device 60 is used for branding letters and/or marks of a product name and/or a maker's name on the surface of the dough 201. The branding device 60 includes a branding head that is provided with letters and/or marks, a heating means that heats the branding head, and a vertically moving means that presses the branding head onto the surface of the dough 201. After a brand is pressed on the surface of the dough 201, the dough 201 is completed as a marketable pancake. In the embodiment shown in FIG. 2(a), the dough 201 is finished as the *an-maki* 200. The finished pancakes are taken out from the conveyance device 10 by the takeout device 70.

The takeout device 70 includes a stopping part that stops a finished pancake at a prescribed position before the pancake is taken out, and a support part that scoops up the finished pancake. The stopping part includes two stopping plates that extend from the top board of the stopping part, the two plates that are configured to sandwich a pancake between them, whereby the stopping part is formed into a π letter shape. The support part includes a scooping plate that is fork-shaped, and that is to be inserted between a pancake and the baking plate 11 to scoop up the pancake.

A finished pancake is taken out in the following manner: (1) the stopping part descends so that a transported pancake is sandwiched between the stopping plates; (2) the support part moves to the pancake from the downstream side; (3) the support part inserts the fork-shaped scooping plate between the pancake and the baking plate 11; (4) the support part ascends along with the stopping part; (5) the support part along with the stopping part moves to above a carrying-out table, and descends to the table; and (6) the support part moves back to the downstream side to place the pancake on the carrying-out table. As described above, the apparatus 1 is capable of consistently performing the processes from baking to forming a dough 201, and to taking out a finished pancake from the conveyance device 10. The above-described operations of each component of the apparatus 1 is centrally commanded and controlled using a control panel 100 shown in FIG. 1.

FIG. 4(a) to FIG. 4(h) illustrate the operations for forming a dough by the forming device of an apparatus for manufacturing folded pancakes according to an embodiment of the present invention. FIG. 4(a) to FIG. 4(h) present the process of pancake forming while a dough 201 is being transported through the forming device. FIG. 4(a) is the state where the filling 202 is placed on the dough 201 at the upstream side of the forming device, and FIG. 4(h) is the state where forming of the dough 201 has been finished at the downstream side of the forming device. Among FIG. 4(a) to FIG. 4(h), FIG. 4(a) to FIG. 4(d) are the first forming process performed by the first forming unit 51, and FIG. 4(e) to FIG. 4(h) are the second forming process performed by the second forming unit 51.

If the dough 201 that carries the filling 202 reaches the position where the first forming unit 51 is located, as shown in FIG. 4(b), the front part of the dough 201 in the transport direction meets the scraper 54, and is lifted up from the baking plate 11 by the scraper 54 tilted at a prescribed angle. Next, as shown in FIG. 4(c), the scraper 54 rotates so as to fold the dough 201 so as to cover the filling 202. Then, as shown in FIG. 4(d), the scraper 54 continues to rotate until the dough 201 covers the filling 202. If the dough 201 is elastic, so that the dough 201 likely returns from the position where the dough 201 covers the filling 202 after the scraper 54 has moved away from the surface of the dough 201, the scraper 54 may be configured to strongly press the dough 201 at the final stage of the first forming process so that the dough 201 is stuck to the filling 202.

While the first forming process is being performed, the first driving shaft 53 rotates the scraper 54 in accordance with the transportation of the dough 201 so that the scraper 54 can properly contact the dough 201, which requires two-dimensional movement of the first driving shaft 53. Such two-dimensional movement is achieved by using a motor control and/or cam mechanism. After the first forming process performed for a certain dough 201 has been completed, the scraper 54 must return to the position shown in FIG. 4(b) to deal with the coming new dough 201. In order to restore the position of the scraper 54 shown in FIG. 4(b), if the scraper 54 is rotated in the direction opposite to the rotation direction shown in FIG. 4(b) to FIG. 4(d), and the first driving shaft 53 needs to be lifted up once as similarly shown in FIG. 4(c) to avoid the dough 201 that has been formed, and the baking plate 11 that carries the formed dough 201.

In contrast, in the embodiments, the scraper 54 continues to rotate in the same direction to reach the position shown in FIG. 4(b). In FIG. 4(a) to FIG. 4(d), the scraper 54 rotates in the counterclockwise direction while forming the dough 201, and in order for the scraper 54 to return from the position in FIG. 4(d) to the position in FIG. 4(b), the scraper 54 continues to rotate in the same counterclockwise direction around the first driving shaft 53 to reach the position shown in FIG. 4(b). As a result, from the position to start forming the dough 201 to the position to await the next dough 201, the scraper 54 and the first driving shaft 53 rotate once. Because the scraper 54 and the first driving shaft 53 are configured to operate as described above, the period between the timing to start forming the two successive doughs 201 is shortened.

If the first forming process has been completed, the formed dough 201 is transferred to the second forming unit 52, where the dough 201 is formed so as to cover the filling 202. In the embodiment shown FIG. 4(e) to FIG. 4(h), the second forming unit 52 also includes a scraper 54, and the scraper 54 of the second forming unit 52 operates in the same manner as the scraper 54 of the first forming unit 51. As shown in FIG. 4(f) to FIG. 4(h), the second folding of the dough 201 is performed so as to wrap the filling 202 in the center of the folded dough 201. The operation of the second forming unit 52 before the unit 52 deals with the next dough 201 is performed in the same manner as the operation of the first forming unit 51.

FIG. 5(a) to FIG. 5(h) illustrates the operations for forming a dough by the forming device of an apparatus for manufacturing folded pancakes according to another embodiment of the present invention. The embodiment in FIG. 5(a) to FIG. 5(h) similarly shows the state where a dough 201 is formed while being transported as in the embodiment in FIG. 4(a) to FIG. 4(h). However, the embodiment in FIG. 5(a) to FIG. 5(h) differs from the embodiment in FIG. 4(a) to FIG. 4(h) in that the second forming unit 52 includes a roller 55, not the scraper 54.

In the second forming unit 52 shown in FIG 5(f) to FIG. 5(h), the roller 55 peels off the dough 201 from the baking plate 11 little by little due to the rotation of the roller 55, so as to form a round-shaped dough 201, whereby the dough 201 is finished in a rolled-up shape in the second forming process. If the second forming unit 52 includes the roller 55, before the unit 52 deals with the next dough 201, the roller 55 rises once to avoid the formed dough 201.

FIG. 6 is a flow chart for explaining a method for manufacturing folded pancakes according to embodiments of the present invention. With reference to FIG. 6, the manufacturing process will be explained. In step S100, a dough-supply machine 20 discharges doughs 201 onto a baking plate 11. Multiple baking plates 11 are mounted in a row on the conveyance guide of a conveyance device 10, the conveyance guide continuously operating in a circular manner continuously so that the baking plates 11 also move continuously in a circular manner. The dough-supply machine 20 includes a piston 22 and a nozzle 24, by both of which the dough 201 that has been provided into a hopper 21 of the dough-supply machine 20 is continuously discharged onto each of the baking plates 11 so as to form a desired shape of the dough 201. Also, the dough-supply machine 20 includes a reciprocating means that moves a supply mechanism that includes the hopper 21 in a reciprocating manner in the transport direction of the conveyance device 10. While the dough 201 is being sucked into the cylinder due to the backward movement of the piston 22, the dough 201 cannot be discharged onto the baking plate 11. But during such a period, the reciprocating means moves the supply mechanism in the transport direction, whereby the dough 201 can be supplied onto the baking plates 11 without stopping the movement of the conveyance device 10.

In step S110, a baking device 30 bakes the doughs 201 that are being transported. The baking device 30 includes two baking parts (an upper baking part 31 and a lower baking part 32) respectively above and below the baking plates 11 that carry the doughs 201, the baking parts heating and baking the doughs 201 from both above and below.

In step S120, a filling-replenishment device 40 discharges a filling 202 onto the baked dough 201. More than two kinds of the fillings 202 may be supplied onto one dough 201. If more than two kinds of the fillings 202 are to be supplied onto one dough 201, the nozzles 24 that each correspond to each kind of the filling 202 are provided, and are configured such that each of the nozzles 24 can independently adjust its position to discharge the filling 202 and the amount of the filling 202 to be discharged.

After the filling 202 has been supplied onto the dough 201, the baked dough 201 is formed by a forming device 50 so that the filling 202 is covered by the baked dough 201. The forming device 50 includes a first forming unit 51 that is located at the upstream side of the forming device 50, and a second forming unit 52 that is located at the downstream side of the forming device 50, whereby both the units enable the continuously transported doughs 201 to be formed smoothly.

In step S130, the forming device 50 performs the first forming process using the first forming unit 51. The first forming unit 51 includes a scraper 54. The first forming process is performed such that the scraper 54 set at a prescribed angle is inserted between the front end of the dough 201 and the baking plate 11 so as to lift up the end of the dough 201 from the baking plate 11, so that the dough 201 is formed so as to cover the filling 202.

In step S140, the second forming unit 52 performs the second forming process such that the dough 201 on which the first forming process has been performed further covers the filling 202. In the embodiments, the second forming unit 52 includes a scraper 54 or a roller 55. If the second forming unit 52 includes the scraper 54, the second forming process is performed such that the dough 201 that has been folded so as to cover the filling 202 is further folded so as to wrap the filling 202. If the second forming unit 52 includes the roller 55, the second forming process is performed such that the dough 201 that has been folded so as to cover the filling 202 is further rolled up so as to wrap the filling 202.

In step S150, the dough 201 that has been formed as a finished pancake in the second forming process is taken out by a takeout device 70. The takeout device 70 includes a stopping part that has stopping plates used to sandwich a finished pancake, and a support part that scoops up the pancake sandwiched between the stopping plates. While the finished pancake is sandwiched by the plates of the stopping part, the support part is inserted under the pancake to scoop it up, and after the pancake has been taken out from a conveyance guide, the support part moves back along with the sandwiched pancake, and transfers the pancake onto a carrying-out table. Thus, the finished pancake is taken out from the conveyance guide without causing any damage to the finished pancake. If a pancake finished after the second forming process is to be branded on its surface, a branding process (not shown) is performed using a branding device 60 between the step S140 and the step S150.

While particular embodiments of the present invention have been shown and described with reference to the drawings, it will be appreciated by those skilled in the art that changes and modifications may be made thereto without departing from the invention in its broader aspects.

### Description of Reference Numerals

- 1: apparatus for manufacturing folded pancakes
- 11: baking plate
- 10: conveyance device
- 20: dough-supply machine
- 21: hopper
- 22: piston
- 23: valve
- 24: nozzle
- 30: baking device
- 31: upper baking part
- 32: lower baking part
- 40: filling-replenishment device
- 50: forming device
- 51: first forming unit
- 52: second forming unit
- 53: first and second driving shafts
- 54: scraper
- 55: roller
- 60: branding device
- 70: takeout device
- 80: waste-removing device
- 90: oil-application device
- 100: control panel
- 200: folded pancake
- 201: dough
- 202: filling

## Claims

1. An apparatus for manufacturing folded pancakes comprising:
a conveyance device comprising baking plates moving continuously and circularly; and
a forming device attached to the conveyance device, the forming device comprising a first forming unit that forms a dough that has been baked such that one end of the dough is folded in a direction to cover a filling, and a second forming unit that forms the dough such that the dough formed by the first forming unit further covers the filling, the first forming unit further comprising a scraper;
wherein the scraper is removably fixed to a driving shaft that makes two-dimensional movement in the vertical direction and in a dough-transport direction while rotating, and is configured to operate such that the scraper (i) awaits the dough that is being transported is tilted at a prescribed angle, (ii) lifts up the front part of the dough to form the dough while rotating, and (iii) further rotates in the same direction as the direction to form the dough, so as to return to the position where the scraper awaits a coming new dough.

2. The apparatus according to Claim 1, the second forming unit further comprising a scraper that forms the dough in a folded manner, or a roller that forms the dough into a rolled shape.

3. A method for manufacturing folded pancakes using an apparatus for manufacturing folded pancakes that comprise a conveyance device comprising baking plates moving continuously and circularly, and a forming device attached to the conveyance device, the method comprising:
a forming step in which the forming device forms a dough that has been baked such that the dough covers a filling;
the forming step comprising a first forming step in which an end part of the baked dough is folded in a direction to cover the filling by using a first forming unit of the forming device, and a second forming step in which the dough that has been formed in the first forming step is formed such that the dough further covers the filling using a second forming device of the forming device;
wherein the first forming unit comprises a scraper, and the scraper is removably fixed to a driving shaft that makes a two-dimensional vertical movement and in the dough transport direction while rotating, and is configured to operate such that the scraper (i) that awaits the dough that is being transported is tilted at a prescribed angle, (ii) lifts up the front part of the dough to form the dough while rotating, and (iii) further rotates in the same direction as the direction to move the dough to return to the position where the scraper awaits a coming new dough.

4. The method according to Claim 3, the second forming unit further comprising a scraper that folds the dough, or a roller that forms the dough into a rolled shape.

5. The method according to Claim 3 or Claim 4, the apparatus for manufacturing folded pancakes further comprising a dough-supply machine that is attached to the conveyance device, a baking device, a filling-replenishment device, and a takeout device, the method further comprising:
a dough-discharging step in which the dough-supply machine discharges dough that has been provided into a hopper of the dough-supply machine onto each of the baking plates that move continuously and circularly so as to form a desired shape of the dough, the dough-discharging step being performed before the forming step; and
a baking step in which the baking device bakes the dough that has been discharged;
a filling-discharging step in which the filling-replenishment device discharges a filling on the baked dough; and
a takeout step in which the takeout device takes out the formed dough from the conveyance device.
